# EUROPÄISCHE PATENTSCHRIFT

(11) **EP 1 677 593 B1**
(45) Veröffentlichungstag und Bekanntmachung des Hinweises auf die Patenterteilung: **17.12.2008**
(21) Anmeldenummer: 04762732.8
(22) Anmeldetag: 02.09.2004
(51) Int. Cl.: A01N 1/02

(54) **PERFUSIONSKREISLAUF**
PERFUSION CIRCUIT
CIRCUIT DE PERFUSION

(30) Priorität: 03.09.2003 DE 10340487
(43) Veröffentlichungstag der Anmeldung: 12.07.2006
(73) Patentinhaber: Technische Universität Dresden, 01062 Dresden (DE); Universität Leipzig, 04109 Leipzig (DE)
(72) Erfinder: ARZT, Joachim, 08468 Reichenbach (DE); GNÜCHTEL, Albrecht, 01309 Dresden (DE); THIELE, Christine, 01129 Dresden (DE); SCHÖN, Michael, 04157 Leipzig (DE)
(74) Vertreter: Kaufmann, Sigfrid
(86) Internationale Anmeldenummer: PCT/DE2004/001945
(87) Internationale Veröffentlichungsnummer: WO 2005/022995

(56) Entgegenhaltungen:
- WO-A-00/60936
- WO-A-94/28710
- WO-A-99/15011
- MICHAEL R. SCHÖN: "Transplantation von Lebern nicht-herzschlagender Spender im Schweineleber-Transplantationsmodell" 1999, (HABILITATIONSSCHRIFT) HUMBOLDT-UNIVERSITÄT , BERLIN , XP002314065 in der Anmeldung erwähnt Seite 16, Absatz 1 - Seite 18, Absatz 3; Abbildung 1 Seite 36, Absatz 3 - Seite 41; Abbildung 10

## Beschreibung

Die Erfindung betrifft einen Perfusionskreislauf zur extrakorporalen Vitalerhaltung oder Regenerierung von Organen, Extremitäten oder Gewebelappen (im folgenden Organe) für den Einsatz bei Transplantationen oder bei extrakorporaler Leberunterstützung oder für biochemische oder pharmakologische Untersuchung an isolierten Organen.

Einrichtungen für die Perfusion isolierter Organe sind bekannt.

In großem Umfang durchgesetzt hat sich die hypotherme Konservierung bei 0 bis 4°C. Unter Verwendung verschiedenen Konservierungslösungen lassen sich Konservierungszeiten von über 24 Stunden erzielen. Eine Organregenerierung ist jedoch mit diesem Standardverfahren nicht möglich. Für Organe nicht-herzschlagender Spender ist die hypotherme Konservierung ungeeignet.

Für die Vitalerhaltung oder Regenerierung von Organen nicht-herzschlagender Spender setzt man normotherme Perfusionseinrichtungen ein. Organe hirntoter Spender können ebenfalls normotherm perfundiert vital erhalten werden.

Nach DE 44 07 863 C2 besteht eine Perfusionseinrichtung aus zwei getrennten Kreislaufsystemen, einem Perfusat- und einem Dialysatkreislauf, dem ein Oxygenator zugeordnet ist, sowie einer Einrichtung zur Spülreinigung. Letztere erfolgt zwischendurch nach jeweiliger Abschaltung der beiden anderen Kreisläufe. Jedem Kreislauf ist eine Pumpe zugeordnet. Vorschlagsgemäß wird bei einer Temperatur von 21°C gearbeitet. Die im Tierversuch konservierte Vorderpfote eines Schweins lag im Sprühstrahl des Perfusats in einer luftdicht geschlossenen Kammer.

WO 00/60936 A1 offenbart eine Perfusionseinrichtung enthaltend einen Perfusatkreislauf mit einem Oxygenator und einem Pump sowie einen Dialysatkreislauf die in einem Reservoir zusammenkommen wobei die Zufluß des Perfusats reguliert wird durch Einstellung der Reservoirhöhe. In dem Perfusatkreislauf sind keine Ventile angeordnet die e8ine Regulierung der Perfusatzufluß ermöglichen.

Gemäß WO 99/15011 A1 wird das Perfusat zentral aufbereitet, d. h., temperiert, oxygenisiert und dialysiert. Es wird mit einer Pumpe von einer Hauptleitung aus auf die zur Durchströmung des Organs notwendige Zahl von Leitungen aufgeteilt. Bei der Konservierung von Lebern sind Zuleitungen zur Vena portae und zur Arteria hepatica vorgesehen. Beide erhalten also dasselbe, mit Sauerstoff angereicherte Perfusat, wobei das jeweilige Strömungsvolumen vom Strömungswiderstand der Lebergefäße bestimmt wird. Die Leber liegt in einer Perfusionskammer. Das aus der Vena cava ausströmende Perfusat strömt über die Leber in die Kammer und von dort in einen zentralen Sammelbehälter.

Neuhaus, P. entwickelte Anfang der 80er Jahre eine geschlossene und druckoszillierende Leberperfusion (Extrakorporale Leberperfusion: Entwicklung und Erprobung eines neuen Modells - Habilitationsschrift. 1982; Medizinische Hochschule Hannover). Hierbei befindet sich die Leber, von einer Kunststoffhülle geschützt, in einer flüssigkeitsgefüllten, geschlossenen Organperfusionskammer, auf die von außen zyklische Druckschwankungen, welche Atemexkursionen nachahmen, angelegt werden. Die Gefäßlumina folgen den künstlichen intraabdominellen Druckschwankungen. Das Perfusionsergebnis kann durch diese Perfusionstechnik, insbesondere in der Läppchenperipherie, deutlich verbessert werden. Des weiteren wird die großflächige Ausbildung von unterperfundierten Arealen vermieden, die bedingt durch die Größe und das damit verbundene Gewicht von Schweinelebern bei der herkömmlichen Lagerung auf der Unterseite auftreten.

Schön, M. R. verwendet in einer Perfusionseinrichtung eine solche flüssigkeitsgefüllte geschlossene Perfusionskammer mit zyklischen Druckschwankungen zur normothermen extrakorporalen Leberperfusion (Transplantation von Lebern nicht-herzschlagender Spender im Schweineleber-Transplantationsmodell - Habilitationsschrift 1999. Humboldt Universität zu Berlin). Die Organperfusionskammer wird von Wasser durchströmt, das mit einem externen Wärmetauscher auf etwa 37°C erwärmt wird. Dieser Kreislauf ist zusätzlich zum Perfusionskreislauf erforderlich. Das Perfusat wird nach dem Durchgang durch das Organ wie üblich gesammelt, danach weitergeleitet und temperiert. Ein Teil wird oxygenisiert und dialysiert. Dieser Teilstrom wird etwa zur Hälfte direkt der Arteria hepatica zugeführt und zur anderen Hälfte mit dem verbliebenen Reststrom des Perfusats über eine Pumpenanordnung gemischt. Das Mischpenfusat wird über einen weiteren Wärmetauscher in die Vena portae geleitet.
Jeder Teilkreislauf enthält mindestens eine Pumpe, einen Wärmetauscher und mindestens ein Reservoir, um eine physiologische Dosierung und Aufbereitung der Perfusatteilströme in die Vena portae einerseits und die Arteria hepatitis andererseits zu erreichen. In dieser Arbeit konnte mit dieser Einrichtung im Experiment nachgewiesen werden, daß die normotherme Konservierung eine Alternative zur Kaltkonservierung ist und zwar, sowohl allgemein als auch bevorzugt zur Verwendung von Lebern nicht-herzschlagender Spender.

Der physiologischen Versorgung des Organs kommt dieses Kreislaufsystem nahe; allerdings scheint der hohe apparative Aufwand einer weiteren Annäherung an die natürliche Physiologie hinderlich.

Aufgabe der Erfindung ist es, einer natürlichen physiologischen Versorgung des Organs bislang unerreicht nahe zu kommen und diesen Standard betriebssicher aufrechtzuerhalten. Um Schädigungen des isolierten Organs zu vermeiden, ist es insbesondere notwendig, eine Blutschädigung durch Apparaturen möglichst auszuschließen oder zumindest nachhaltig zu vermindern und die durch lange Verweilzeiten des oxygenierten Perfusates unkontrollierbaren Nebeneffekte, die sich nachteilig auf die Vitalerhaltung des extrakorporalen Organs auswirken, zu verhindern.

Diese Aufgabe wird erfindungsgemäß durch die kennzeichnenden Merkmale des Hauptanspruches gelöst. Weitere vorteilhafte Ausführungen ergeben sich aus den nachfolgenden Ansprüchen.

Der Erfindung liegt der Gedanke zugrunde, einen nachteiligen Einfluß von Apparaturen, Fremdoberflächen und Hilfsaggregaten zu vermeiden. Einem weiteren Gedanken der Erfindung folgend wird die Verweilzeit von oxygeniertem Perfusat gering gehalten. Überraschend wurde festgestellt, daß ein erfindungsgemäß geringerer apparativer Aufwand dazu beiträgt, die Blutschädigung zu vermindern und so den vitalerhaltenden Kreislauf den natürlichen physiologischen Verhältnissen weiter anzupassen.

Erfindungsgemäß wird die Aufgabe dadurch gelöst, daß bei einer Perfusionseinrichtung zur extrakorporalen Konservierung von Organen mit einem Perfusionskreislauf und einem Dialysatkreislauf das Dialysat durch die Organperfusionskammer geführt ist. Das Organ ist dabei von einer Schutzhülle aus Kunststoff geschützt eingelagert. Das Dialysat wird im Kreislauf durch den Dialysator geführt. Dabei kann zwar die Schadstoffkonzentration im Dialysat ansteigen, sie bleibt jedoch in beherrschbaren Grenzen. Durch die Größe der Organperfusionskammer bleibt die Temperatur relativ konstant. Sie kann mit einer regelbaren, großflächigen Temperatureinrichtung bei relativ geringer Leistung temperiert werden. Die so in einfacher Weise eingestellte Temperatur kann auch zur Temperierung des Perfusats genutzt werden. Hierzu wird das Dialysat in einer bevorzugten Ausführung als Wärme- bzw. Kältequelle an wenigstens einen Wärmetauscher angeschlossen.

Im weiteren liegt der Erfindung der Gedanke zugrunde, im Perfusionskreislauf wenigstens ein Stellventil zur Einstellung des Verhältnisses der Teilströme durch den und zu dem wenigstens einen Eingang des zu konservierenden Organs vorzusehen.

Die Mischung des Perfusats erfolgt betriebssicher in einem der beiden Reservoire. Der Kreislauf ist digital durch einen Prozeßrechner gesteuert. Der einfache Aufbau und die Übersichtlichkeit des vitalerhaltenden Kreislaufes gemäß der Erfindung ermöglicht in vorteilhafter Weise eine manuelle Steuerung, insbesondere im Notbetrieb, die gleichfalls betriebssicher durchgeführt werden kann.
Mit einer Anordnung gemäß der Erfindung wird gegenüber dem Stand der Technik mindestens eine weitere Pumpe bzw. Kreislauf eingespart.

Insbesondere für biochemische oder pharmakologische Untersuchungen werden Anordnungen gemäß der Erfindung gekoppelt und parallel geschaltet. Dabei werden wesentliche technische Aggregate, also Pumpen, Ventile und Reservoirs und die medizinischen Aggregate, also der Dialysator und/oder der Oxygenator gemeinsam von den gekoppelten Einzelkomponenten verwendet. Mit dieser gekoppelten Anordnung wird eine äquivalente Versuchsanordnung realisiert.

Die folgenden Ausführungsbeispiele zeigen auf, wie gemäß der Erfindung eine unabhängige Dosierung verschiedener Perfusate auf mehr als einen Organeingang zu erreichen ist.

Im folgenden wird ein Ausführungsbeispiel der Erfindung anhand der beigefügten Zeichnungen näher erläutert.
Es zeigt
Fig. 1 eine Schemadarstellung der Anordnung, insbesondere nach Anspruch 4 am Beispiel einer Leber
Fig. 2 eine Schemadarstellung der Anordnung, insbesondere nach Anspruch 5 am Beispiel einer Leber
Fig. 3 eine Schemadarstellung der Anordnung, insbesondere nach Anspruch 6 am Beispiel einer Leber
Fig. 4 eine Schemadarstellung der Anordnung, insbesondere nach Anspruch 6 am Beispiel eines Herzens
In allen Figuren ist die Organperfusionskammer 1 in Höhe des Organs 3 geschnitten und in einer Draufsicht dargestellt.

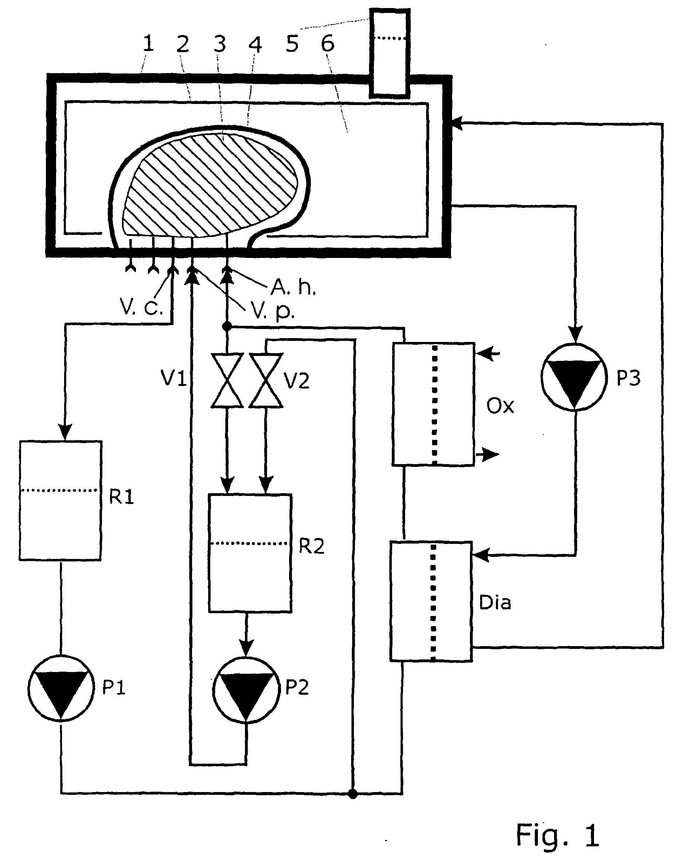

Zunächst wird auf Figur 1 Bezug genommen.
Ein zu konservierendes, isoliertes Organ 3 liegt durch eine Schutzhülle 4 geschützt in einer kastenförmigen Organperfusionskammer 1. Eine regelbare Temperatureinrichtung 2 ist als eine Heizmatte ausgeführt und befindet sich auf dem Boden der Organperfusionskammer 1. Die Organperfusionskammer 1 ist vollständig mit Dialysat 6 gefüllt und dient als Dialysatspeicher. Zur Reinigung des Perfusates folgt ein durch eine Pumpe P3 angetriebener Dialystkreislauf mit dem Dialysator Dia. Beim Durchlauf durch den Dialysator Dia wird das Perfusat nicht nur bestimmungsgemäß gereinigt, sondern dabei auch temperiert.
Im Ausführungsbeispiel ist das Organ 3 eine Leber. Sie hat die beiden Eingänge Vena portae V.p. und Arterie hepatica A.h. und den Ausgang Vena cava V.c., durch die das Perfusat wie unten erläutert ein- bzw. austritt. Weitere Sekundärausgänge, beispielgebend für die Galle, sind nicht dargestellt. Die Organperfusionskammer 1 wird analog zu Neuhaus zyklischen Druckschwankungen zur Nachbildung einer intraabdominalen Atemexkursion unterworfen.

Das aus der Vena cava V.c. austretende Perfusat wird im Reservoir R1 gesammelt und mit der Pumpe P1 weitergeleitet. Ein Teil strömt über das Ventil V2 in ein zweites Reservoir R2. Der andere Teil wird über den Dialysator Dia und einen Oygenisator Ox geführt. Der dialysierte, oxygenisierte und temperierte Teilstrom des Perfusats liegt zum einen direkt am Eingang der Arterie hepatica A.h. und zum anderen an einem weiteren Stellventil V1 an. Die über die Ventile V1 und V2 geleiteten Perfusatteilströme vermischen sich in einem Reservoir R2.

Das Mischperfusat wird mit einer Pumpe P2 in die Vena portae V.p. geleitet. Mit den zwei Pumpen P1 und P2, den Stellventilen V1 und V2 und dem Reservoir R2 ist eine unabhängige Dosierung der Teilströme durch die Organgefäße, also hier die Lebergefäße, realisiert.

Senkrecht auf der Perfusionskammer 1 ist als Mittel zur Füllstandsanzeige beispielgebend ein Steigrohr 5 aufgesetzt. In Fig. 1 und den beiden anderen Figuren ist dieses Steigrohr um 90° in die Blattebene gedreht.
Mehrere Meßsonden nehmen Kenngrößen und Parameter des Kreislaufes, beispielgebend Füllstand, Druck, Temperatur auf und ermöglichen, daß diese Signale für eine Anzeigeeinrichtung oder einer digitalen Prozeßsteuerung verarbeitbar sind.

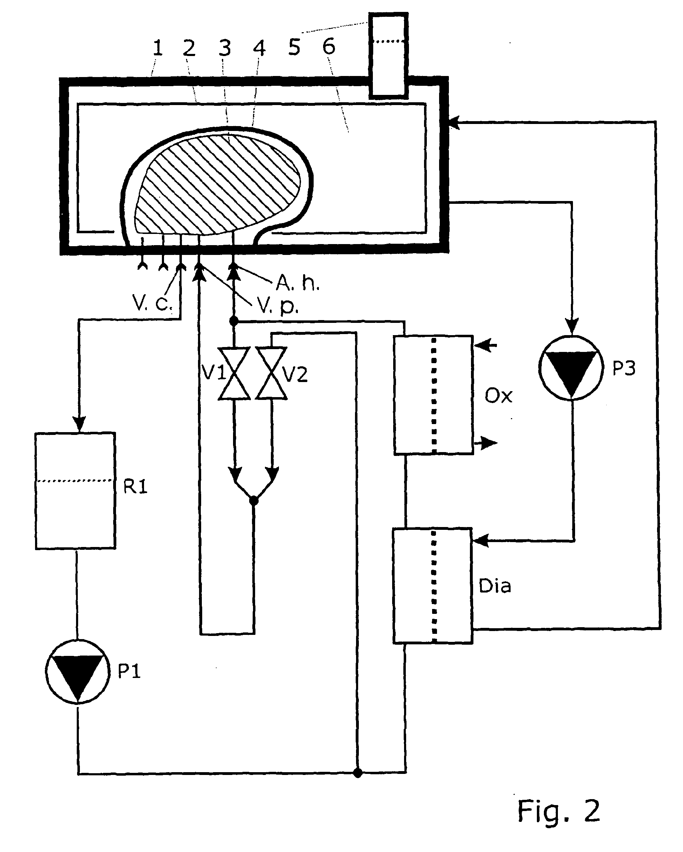

Im weiteren wird auf Figur 2 Bezug genommen.
Bei dieser Variante wurde gegenüber dem vorgehenden Ausführungsbeispiel das Reservoir R2 und die Pumpe P2 eingespart. Die Mischung des Perfusates für die Vena portae V.p. erfolgt über einen Y-Konnektor, den Zuleitungen für das Organ.

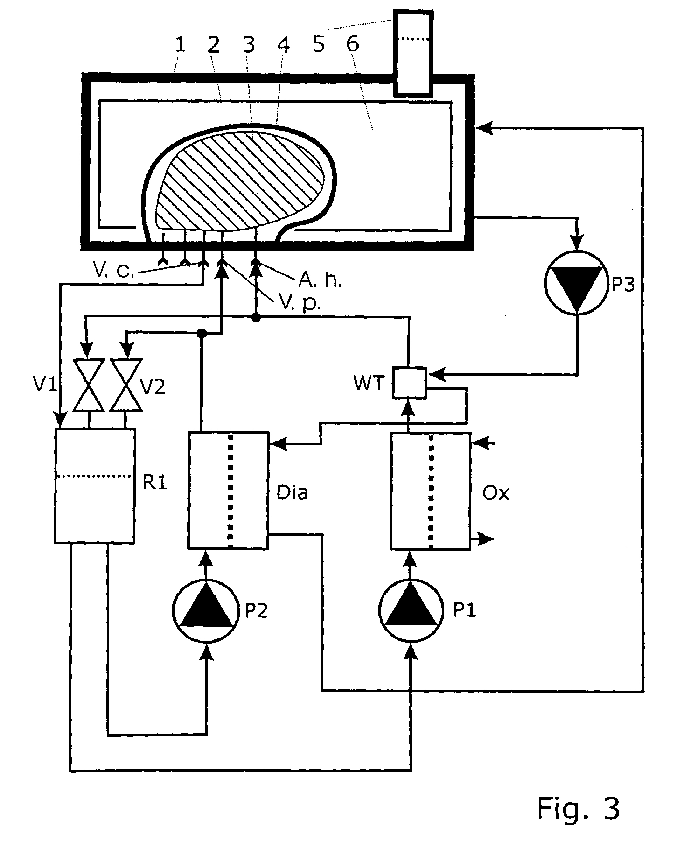

Eine dritte Ausführung gemäß Fig. 3 kommt ebenfalls ohne Reservoir R2 aus. Die über die Ventile V1 und V2 fließenden Teilströme werden im Reservoire R1 gesammelt. Diese Variante hat wie bei der ersten Ausführung nach Fig. 1 mit dem Reservoir R1 eine Pufferung, wodurch eine unabhängige Dosierung der Teilströme gleichfalls gesichert ist.

Im Gegensatz zu den beiden ersten Ausführungen befinden sich der Oxygenator Ox und der Dialysator Dia in getrennten Zweigen. Die Temperierung der Perfusates erfolgt wie bisher im Dialysatorzweig. Um das Perfusat auch beim Durchlauf durch den Oxygenator Ox zu temperieren ist ein Wärmetauscher WT vorgesehen. Der Wärmetauscher WT ist an den Dialysatkreislauf angeschlossen. In einer Weiterbildung dieser Ausführungsform kann auf das Ventil V2 ohne einen Verlust der physiologischen Versorgung des extrakorporalen Organs 3 verzichtet werden.

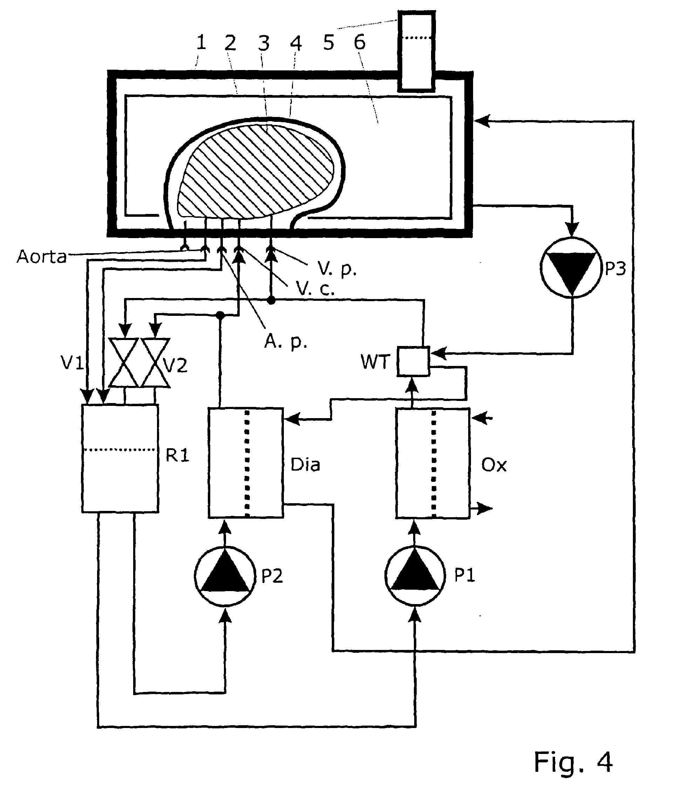

Eine vierte Ausführung gemäß Fig. 4 ist analog zu Fig. 3 aufgebaut. Es zeigt als eingelagertes extrakorporales Organ 3 ein Herz mit der Arteria pulmonalis A.p und Vena pulmonalis V.p. als Zuleitung und die Vena cava V.c. und Aorta als Ableitung des Perfusates. Zusätzlich ist eine Verbindung zwischen der Arteria pulmonalis A.p. oder der Aorta zum Reservoir R1 vorgesehen.

Die in den Zeichnungen verwendeten Bezugszeichen haben folgende Bedeutung:
- 1: Organperfusionskammer
- 2: regelbare Temperatureinrichtung
- 3: Organ
- 4: Schutzhülle
- 5: Füllstandsanzeige
- 6: Lagerflüssigkeit - Dialysat

Technische Komponenten:
- V1, V2: Ventile
- R1, R2: Reservoire
- P1, P2: Perfusatpumpen
- P3: Dialysatpumpe
- WT: Wärmetauscher

Medizinische Hauptkomponenten:
- Ox: Oxygenator
- Dia: Dialysator

Venöse Zugänge:
- V.p.: Vena portae
- V.c.: Vena cava

Arterielle Zugänge:
- A.p.: Arteria pulmonalis
- A.h.: Arteria hepatica
- Aorta:

## Patentansprüche

1. Perfusionseinrichtung zur extrakorporalen Vitalerhaltung oder Regenerierung von Organen (3) mindestens bestehend aus einer Organperfusionskammer (1) mit einer regelbaren Temperatureinrichtung (2) und einem darin eingelagerten Organ (3), wobei das Organ (3) von einer impermeablen Schutzhülle (4) ummantelt und im weiteren vollständig von einer Lagerflüssigkeit (5) umgeben ist,
mit einem vitalerhaltenden Kreislauf umfassend einen Perfusatkreislauf, einen Oxygenator (Ox), einen Dialysator (Dia), einem Dialysatkreislauf und einen Wärmetauscher (WT)
**dadurch gekennzeichnet, daß**
in dem Perfusatkreislauf mindestens zwei Pumpen (P1, P2) und zwei Ventile (V1, V2) zur Dosierung der Perfusatteilströme, die durch den Dialysator (Dia) und/oder den Oxygenator (Ox) und zu wenigstens einem Eingang des zu konservierenden Organs (3) führen, und der davon unabhängigen Einstellung des Mischungsverhältnisses bei der Perfusataufbereitung für eine physiologische Versorgung des Organs (3) angeordnet sind und er höchstens über zwei Reservoire (R1, R2) zur Sammlung und Mischung des Perfusates verfügt.

2. Perfusionseinrichtung nach Anspruch 1, **dadurch gekennzeichnet, daß** beide Ventile (V1) und (V2) vor dem Reservoir (R2) angeordnet sind, der Ausgang des Reservoirs (R2) über die Pumpe (P2) mit der Vena portae (V.p.) verbunden ist, der Ausgang der Vena cava (V.c.) über das Reservoir (R1) und die Pumpe (P1) an einer Verbindung zwischen dem Ventil (V2) und dem Eingang des Dialysators (Dia) liegt und das im Dialysator (Dia), Oxygenator (Ox) und Wärmetauscher (WT) dialysierte, oxygenisierte, und temperierte Perfusat an eine Verbindung zwischen dem Ventil (V1) und der Arteria hepatica (A.h.) angeschlossen ist und die Ausgänge der Ventile (V1) und (V2) direkt an die Vena portae (V.p.) angeschlossen sind.

3. Perfusionseinrichtung nach Anspruch 1, **dadurch gekennzeichnet, daß** der Ausgang der Vena cava (V.c.) mit einem Reservoir (R1) verbunden ist, beide Ventile (V1) und (V2) vor diesem Reservoir (R1) angeordnet sind, der Ausgang des Reservoires (R1) zum einen über eine Pumpe (P1), den Oxygenator (Ox) und den Wärmetauscher (WT) erstens mit dem Ventil (V1) und der Arteria hepatica (A.h.) und zweitens mit dem Dialysator (Dia)
und zum anderen über eine Pumpe (P2) und den Dialysator (Dia) mit dem Ventil (V2) und der Vena portae (V.p) verbunden ist.

4. Perfusionseinrichtung nach Anspruch 1, **dadurch gekennzeichnet, daß** die regelbare Temperatureinrichtung (2) als Heizmatte ausgeführt ist.

5. Perfusionseinrichtung nach Anspruch 1, **dadurch gekennzeichnet, daß** die regelbare Temperatureinrichtung (2) in die Bewandung der Organperfusionskammer (1) integriert ist.

6. Perfusionseinrichtung nach einem oder mehreren der genannten Ansprüche, **dadurch gekennzeichnet, daß** mehrere Anordnungen nach Anspruch 2 oder 3 parallel gekoppelt sind, wobei die Pumpen (P1, P2), die Ventile (V1, V2), die Reservoire (R1, R2), der Dialysator (Dia) und/oder der Oxygenator (Ox) gemeinsam genutzt sind.

## Claims

1. A perfusion device for extracorporeal vitality preservation or the regeneration of organs (3), comprising at least an organ perfusion chamber (1) with a temperature control device (2) and an organ (3) stored therein, wherein the organ (3) is enclosed in an impermeable protective envelope (4) and furthermore surrounded completely by a storage fluid (5),
with a vitality-preserving circuit comprising a perfusate circuit, an oxygenator (Ox), a dialyser (Dia), a dialysate circuit and a heat exchanger (WT),
**characterised in that**
at least two pumps (P1, P2) and two valves (V1, V2) for metering of the partial perfusate flows through the dialyser (Dia) and/or the oxygenator (Ox) and to at least one inlet to the organ to be preserved (3) and for the correspondingly independent setting of the mixing ratio for preparation of the perfusate for a physiological supply to the organ (3) are arranged in the perfusate circuit and that it possesses at most two reservoirs (R1, R2) for collection and mixing of the perfusate.

2. A perfusion device according to claim 1, **characterised in that** both valves (V1) and (V2) are arranged ahead of the reservoir (R2), the exit of the reservoir (R2) is connected via the pump (P2) with the vena portae (V.p.), the exit of the vena cava (V.c.) lies via the reservoir (R1) and the pump (P1) on a connection between the valve (V2) and the inlet of the dialyser (Dia) and the perfusate dialysed, oxygenised and temperature-adjusted in the dialyser (Dia), oxygenator (Ox) and heat exchanger (WT) is connected at a connection between the valve (V1) and the arteria hepatica (A.h.) and the exits of the valves (V1) and (V2) are connected directly to the vena portae (V.p.).

3. A perfusion device according to claim 1, **characterised in that** the exit of the vena cava (V.c.) is connected with a reservoir (R1), both valves (V1) and (V2) are arranged ahead of this reservoir (R1), and the exit of the reservoir (R1) is connected on the one hand via a pump (P1), the oxygenator (Ox) and the heat exchanger (WT) firstly with the valve (V1) and the arteria hepatica (A.h.) and secondly with the dialyser (Dia)
and on the other hand via a pump (P2) and the dialyser (Dia) with the valve (V2) and the vena portae (V.p).

4. A perfusion device according to claim 1, **characterised in that** the temperature control device (2) is designed as a heating mat.

5. A perfusion device according to claim 1, **characterised in that** the temperature control device (2) is integrated into the walls of the organ perfusion chamber (1).

6. A perfusion device according to one or several of the above claims, **characterised in that** several arrangements according to claim 2 or 3 are linked parallel to each other, wherein the pumps (P1, P2), the valves (V1, V2), the reservoirs (R1, R2), the dialyser (Dia) and/or the oxygenator (Ox) are in use together.

## Revendications

1. Dispositif de perfusion pour le maintien des fonctions vitales ou la régénération d'organes (3) en situation extracorporelle, composé au moins d'une chambre de perfusion d'organe (1) avec un dispositif de régulation de température (2) et un organe (3) qui y est stocké, l'organe (3) étant entouré d'une enveloppe protectrice imperméable (4) et étant entièrement immergé dans une solution de stockage (5),
avec un circuit de maintien des fonctions vitales composé d'un circuit de perfusat, d'un oxygénateur (Ox), d'un dialyseur (Dia), d'un circuit de dialysat et d'un échangeur thermique (E.th.),
**caractérisé en ce que**
le circuit de perfusat comporte au moins deux pompes (P1, P2) et deux vannes (V1, V2) pour le dosage des débits partiels de perfusat qui traversent le dialyseur (Dia) et/ou l'oxygénateur (Ox) et qui sont reliés à au moins une entrée de l'organe conservé (3), ainsi qu'un réglage indépendant du dosage de préparation du perfusat pour l'apport physiologique destiné à l'organe (3), et qu'il dispose au plus de deux réservoirs (R1, R2) pour récupérer et mélanger le perfusat.

2. Dispositif de perfusion selon la revendication 1, **caractérisé en ce que** les deux vannes (V1) et (V2) sont placées avant le réservoir (R2), que la sortie du réservoir (R2) est reliée à la veine porte (V.p.) par l'intermédiaire de la pompe (P2), que la sortie de la veine cave (V.c.) est raccordée à une liaison entre la vanne (V2) et l'entrée du dialyseur (Dia) par l'intermédiaire du réservoir (R1) et de la pompe (P1), que le perfusat dialysé, oxygéné et tempéré dans le dialyseur (Dia), l'oxygénateur (Ox) et l'échangeur thermique (E.th.) est raccordé à une liaison entre la vanne (V1) et l'artère hépatique (A.h.) et que les sorties des vannes (V1) et (V2) sont reliées directement à la veine porte (V.p.).

3. Dispositif de perfusion selon la revendication 1, **caractérisé en ce que** la sortie de la veine cave (V.c.) est reliée à un réservoir (R1), que les deux vannes (V1) et (V2) sont placées avant ce réservoir (R1), que la sortie du réservoir (R1) est reliée premièrement par l'intermédiaire d'une pompe (P1), de l'oxygénateur (Ox) et de l'échangeur thermique (E.th.) à la vanne (V1) et à l'artère hépatique (A.h.) d'une part, et au dialyseur (Dia) d'autre part,
et deuxièmement par l'intermédiaire d'une pompe (P2) et du dialyseur (Dia) à la vanne (V2) et à la veine porte (V.p.).

4. Dispositif de perfusion selon la revendication 1, **caractérisé en ce que** le dispositif de régulation de température (2) est réalisé sous forme de natte chauffante.

5. Dispositif de perfusion selon la revendication 1, **caractérisé en ce que** le dispositif de régulation de température (2) est intégré dans les parois de la chambre de perfusion d'organe (1).

6. Dispositif de perfusion selon une ou plusieurs des revendications précédentes, **caractérisé en ce que** plusieurs configurations selon les revendications 2 ou 3 sont couplées en parallèle, les pompes (P1, P2), les vannes (V1, V2), les réservoirs (R1, R2), le dialyseur (Dia) et/ou l'oxygénateur (Ox) étant utilisés en commun.
